# EUROPÄISCHE PATENTANMELDUNG

(11) **EP 1 134 732 A1**
(43) Veröffentlichungstag der Anmeldung: **19.09.2001**
(21) Anmeldenummer: 01105397.2
(22) Anmeldetag: 12.03.2001
(51) Int. Cl.: G11B 5/73, G11B 5/64, G11B 5/84, B32B 27/36, C08J 5/18

(54) **Biaxial orientierte Trägerfolie für magnetische Aufzeichnungsmedien**

(30) Priorität: 17.03.2000 DE 10013263
(71) Anmelder: Mitsubishi Polyester Film GmbH, 65203 Wiesbaden (DE)
(72) Erfinder: Murschall, Ursula, Dr., 55283 Nierstein (DE); Stopp, Andreas, 55218 Ingelheim (DE); Crass, Günter, 65232 Taunusstein (DE); Müller, Harald, Dr., 65232 Taunusstein (DE)
(74) Vertreter: Schweitzer, Klaus, Dr.

(57) **Zusammenfassung**

Die vorliegende Erfindung betrifft eine wenigstens einschichtige, biaxial orientierte Trägerfolie für magnetische Aufzeichnungsmedien, die überwiegend aus einem kristallisierbaren Polyester aufgebaut ist, mit einer Dicke im Bereich von 1 bis 40 µm. Die Folie weist nach ihrer Konfektionierung zu Kundenrollen über ihre gesamte Wickellänge und -breite eine elektrostatische Aufladung auf, die im Bereich von -80 kV/m bis +80 kV/m liegt, wobei während der Konfektionierung der Kontaktdruck an den Rollenschneidern im Bereich von 300 N/m bis 350 N/m eingestellt wird. Die Folie wird entlang des Folienweges in der Konfektioniermaschine zwischen elektrischen Entladungseinrichtungen hindurchgeführt, die im wickelnahen Bereich angeordnet sind, und eignet sich besonders für hochwertige Audio-, Video- oder Computerbänder sowie für Floppy Disks oder Thermobänder.

## Beschreibung

Die Erfindung betrifft eine ein- oder mehrschichtige biaxial orientierte Trägerfolie für magnetische Aufzeichnungsmedien, die überwiegend aus einem kristallisierbaren Polyester aufgebaut ist. Die Folie zeichnet sich dadurch aus, dass sie nach der Beschichtung eine niedrige Laserdefektrate aufweist und daher sehr gut geeignet ist für hochwertige magnetische Aufzeichnungsmedien. Die Erfindung betrifft weiterhin ein Verfahren zur Herstellung der Folie.

Biaxial orientierte Folien aus Polyester, insbesondere aus Polyethylenterephthalat, Polyethylennaphthalat oder Polycyclohexandimethanolterephthalat, finden wegen ihrer überlegenen Eigenschaften wie Zugfestigkeit, ihrer Reißfestigkeit ihres Elastizitätsmoduls, ihrer Transparenz, ihrer chemischen und thermischen Beständigkeit und dergleichen Anwendung in großem Umfang auf zahlreichen technischen Gebieten so auch als Trägerfolien für magnetische Aufzeichnungsmedien wie z.B. für Audio-, Video- und Computerbänder sowie Floppy Disks, Thermodruckbänder, usw.

Die Polyesterfolien müssen für die verschiedenen Einsatzgebiete spezifische Anforderungen erfüllen, die üblicherweise mit Hilfe der Rohstoffrezepturen oder mittels bestimmter Verfahrenstechniken während der Folienherstellung eingestellt werden.

So werden z.B. bei Magnetbandträgerfolien neben einem gleichmäßigen und guten Gleitverhalten und hoher Abriebfestigkeit besonders hohe Anforderungen an die Homogenität der Oberfläche und an das statische Verhalten gestellt, weil unerwünschte Erhebungen auf der Oberfläche der Trägerfolie, elektrostatische Fehler und hohe statische Aufladung innerhalb der auf diese Oberfläche aufgebrachten Magnetschicht zu Informationsverlusten und sogenannten Laserdefekten führen, die die Qualität des Bandes reduzieren und damit die Einsatzmöglichkeiten des Informationsträgers einschränken. Es gehört zum Stand der Technik, die genannten elektrostatischen Fehler und hohe elektrostatische Aufladung auf der Oberfläche durch Einarbeitung anorganischer und/oder organischer Inertpartikel mit definierter Korngrößenverteilung zu überwinden, beziehungsweise abzumildern. Beispiele für derartige Inertpartikel, die allein oder in Kombination eingesetzt werden können, sind CaCO₃, TiO₂, Al₂O₃, ZrO₂, BaSO₄, Calciumphosphat, Kaolin, SiO₂ oder natürliche und synthetische Silikate.

Zur Verbesserung ihrer Affinität zur Polymermatrix und damit zur Verbesserung der Qualität, d.h. des Eigenschaftsbildes der unter Verwendung dieser Inertpartikel hergestellten Formkörper, werden diese Inertpartikel in Abhängigkeit von ihrer chemischen Zusammensetzung einer Oberflächenbehandlung unterzogen.

Eine Darstellung der Möglichkeiten einer Oberflächenmodifizierung carbonatischer Füllstoffe mit dem Ziel, Einfluß auf die Wechselwirkungen in den Grenzflächen von speziell CaCO₃/Polymer zu nehmen, wird in Plaste und Kautschuk, 37. Jahrgang, Heft 8/1990, Seite 269 und folgende gegeben.

In der US-A-3,227,675 wird die Behandlung von "clays" (Kaolinen) mit Organosiliciumverbindungen zwecks besserer Einbindung in eine Polymermatrix beschrieben.

In der DE-A-35 34 143 werden monodisperse SiO₂-Partikel beschrieben, die vorzugsweise für chromatographische Zwecke gedacht sind, deren auf der Oberfläche befindliche funktionelle Gruppen mit Organotrialkoxysilanen umgesetzt wurden, ohne daß die bisherigen Eigenschaften der Partikel beeinträchtigt wurden.

Ein Verfahren zur Modifizierung von synthetischen silikatischen Füllstoffen mit schwefelhaltigen Organosiliciumverbindungen zwecks Verbesserung ihrer Einbindung in vulkanisierbare Kautschukmischungen wird in der EP-A-0 177 674 beschrieben.

In der US-A-4,567,030 werden ebenfalls monodisperse Mischoxidpartikel beschrieben, die als "filler" verwendet werden können, deren Oberflächen zwecks Verbesserung der Feuchtigkeitsresistenz und der "Dispergierbarkeit in einem Harz", d.h. zwecks Reduzierung derAgglomeratbildung mit einem Aminopropyltrimethoxysilan oder Silanen, die ethylenisch ungesättigte Gruppen enthalten, modifiziert sein können. In der EP-A-0 236 945 wird darauf hingewiesen, dass zur Reduzierung der Agglomeratbildung bei der Polymerisation zweckmäßigerweise die monodispersen Mischoxidpartikel einer Behandlung mit einem Silan-, Titan- oder Aluminium-Kopplungsreagenz unterzogen werden.

In all diesen Schriften werden keine Wege aufgezeichnet, wie die Laserdefektrate, die die Qualität des beschichteten Magnetbandes sehr stark beeinflußt, reduziert werden kann.

Laserdefekte sind Beschichtungsfehler. Es handelt sich um runde bis ovale Dünnstellen in der Magnetschicht oder im ausgeprägten Stadium sogar runde, ovale Löcher in der Magnetschicht (transparente Stellen). Die Polyesterfolie ist im Falle von Laserdefekten ganz oder partiell freigelegt. Der Rand der Magnetschicht ist stark zerklüftet, was auf einen Prozess ähnlich einem punktförmigen Herausreißen der Magnetschicht hindeutet. Die Größe der Schadstelle hat einen Durchmesser zwischen 0,2 bis 0,8 mm. Während der eigentlichen Magnetbandbeschichtung sind die Laserdefekte zum Teil noch nicht voll ausgeprägt. Die Fehler treten voll ausgeprägt beim Schneiden des Magnetbandes zu so genannten »Pancakes« auf. Die Laserdefekte werden mit einem Laserscanner detektiert. Es erfolgt eine 100% Kontrolle. Bei Erkennen eines Laserdefektes wird jeweils der ganze Pancake aussortiert. Für die Magnetband-Beschichtungsindustrie wäre es ein großer Vorteil, eine Trägerfolie einzusetzen, die nach der Beschichtung zu weniger oder besser noch zu gar keinen Laserdefekten führt. Üblicherweise liegt die Ausschussrate wegen Laserdefekten zwischen 3 und 5 %.

Aufgabe der vorliegenden Erfindung war es deshalb, eine wenigstens einschichtige, biaxial orientierte Trägerfolie für magnetische Aufzeichnungmedien mit einer Gesamtdicke von 1 µm bis 40 µm, die im Wesentlichen aus Polyester besteht, zur Verfügung zu stellen, die sich dadurch auszeichnet, dass die Laserdefektrate bei kleiner 2 %, insbesondere bei keiner 1 % liegt.

Gelöst wird die Aufgabe durch eine wenigstens einschichtige Polyesterfolie der eingangs genannten Gattung mit einer Dicke von 1 µm bis 40 µm, die dadurch gekennzeichnet ist, dass die Folie über die gesamte Wickellänge und Wickelbreite eine elektrostatische Aufladung nach der Konfektionierung zu Kundenrollen aufweist, die im Bereich von -80 kV/m bis +80 kV/m, insbesondere von -70 kV/m bis +70 kV/m und vorzugsweise bei -60 kV/m bis +60 kV/m liegt in Kombination mit einem Kontaktdruck an den Rollenschneidern, der im Bereich von 300 N/m bis 350 N/m, insbesondere von 310 N/m bis 340N/m liegt.

Liegt der Kontaktdruck an den Rollenschneidern bei > 350 N/m treten vermehrt elektrostatische Fehler (Statikmarken) auf, die zu einer erhöhten Laserdefektrate führen.

Liegt der Kontaktdruck an den Rollenschneidern bei < 300 N/m wird die Wickelqualität der Folie deutlich verschlechtert, was zu massiven Problemen bei der Weiterverarbeitung führt.

Mehr als überraschend war, dass eine Trägerfolie für magnetische Aufzeichnungen, die nach der Konfektionierung zu Kundenrollen über die gesamte Wickellänge und Wickelbreite eine elektrostatische Aufladung von- 80 kV/m bis + 80 kV/m, insbesondere von- 70 kV/m bis +70 kV/m, vorzugsweise von- 60 kV/m bis + 60 kV/m aufweist und mit einem Kontaktdruck an den Rollenschneidern, der im Bereich von 300 N/m bis 350 N/m, insbesondere von 310 N/m bis 340 N/m zu Kundenrollen gewickelt wurde, eine Laserdefektrate von ≤ 2 % und insbesondere ≤ 1 % aufweist.

Der Fachmann hätte bei dem Versuch, eine Reduzierung der Laserdefektrate zu realisieren, zunächst die innere Sauberkeit des Polyesterrohstoffes verbessert und die Produktionsanlage auf Kontamination durch Fremdstoffe (Öl, Schmierstoffe, Oligomer usw.) untersucht. Des Weiteren hätte der Fachmann dann die Produktions- und Konfektionierungsgeschwindigkeiten reduziert, um so eine mögliche Verringerung der Laserdefektrate zu erreichen.

Es war deshalb für den Fachmann mehr als überraschend, dass eine wenigstens einschichtige Trägerfolie für magnetische Aufzeichnungsmedien mit den angegebenen elektrostatischen Aufladungen in Kombination mit dem angegebenen Kontaktdruck an den Rollenschneidern bei hohen Geschwindigkeiten von bis zu 400 m/min in einer hervorragenden Qualität mit einer Laserdefektrate von ≤ 2 %, insbesondere ≤ 1 % produziert werden kann.

Die hervorragenden Werte für die Elektrostatik in Kombination mit dem angegebenen Kontaktdruck und den Produktionsgeschwindigkeiten bis zu 400 m/min wird dadurch erreicht, dass spezielle elektrische Entladestäbe mit verbesserter Entladeleistung eingesetzt werden.

Insbesondere eignen sich elektrische Entladestäbe der Fa. Eltex/Weil am Rhein vom Typ R50/R51. Vorteilhaft sind isoliert angeordnete Erdleiter, die das E-Feld an den aktiven Spitzen verstärken und damit erhöhte Geschwindigkeiten und größere Abstände bei sehr guter Entladeleistung ermöglichen.

Die Folien können ein- oder mehrschichtig sein, sie können symmetrisch oder asymmetrisch aufgebaut sein, wobei verschieden rezepturierte beziehungsweise rezepturierte oder nicht rezepturierte Polyester oder solche gleicher chemischer Zusammensetzung, jedoch mit unterschiedlichem Molekulargewicht und verschiedener Viskosität, durch Coextrusion vereinigt werden können.

Die erfindungsgemäße Folie besteht im wesentlichen aus einem kristallisierbaren Polyester, aus einem kristallisierbarem Polyethylennaphthalat (PEN) oder Mischungen daraus.

Unter kristallisierbarem Polyester oder kristallisierbarem Polyethylennaphthalat werden
- kristallisierbare Homopolymere
- kristallisierbare Compounds
- kristallisierbare Copolymere
- kristallisierbares Rezyklat
- andere Variationen der kristallisierbaren Thermoplasten
verstanden.

Die Herstellung der Polyester kann sowohl nach dem Umesterungsverfahren, z.B. mit Hilfe von Umesterungskatalysatoren wie z. B. Zn-, Mg-, Ca-, Mn-, Li- oder Ge-Salzen, wie auch nach dem Direktesterverfahren (PTA-Verfahren) erfolgen, bei dem Antimonverbindungen als Polykondensationskatalysatoren und Phosphorverbindungen als Stabilisatoren verwendet werden. Der RSV-Wert der Polyester liegt vorzugsweise im Bereich von 0,4 bis 1,0 dl/g.

Beispiele für Polyester sind Polykondensate aus Terephthalsäure, Isophthalsäure oder 2,6-Naphthalindicarbonsäure mit Glykolen mit 2 bis 10 Kohlenstoffatomen wie Polyethylenterephthalat, Polybuthylenterephthalat, Poly-1,4-cyclohexylendimethylenterephthalat, Polyethylen-2,6naphthalindicarboxylat, Polyehtylennaphthalat/Bibenzoat oder Polyethylen-p-hydroxy-benzoat.

Die Polyester können bis zu 50 Mol-%, insbesondere bis zu 30 Mol-%, aus Comonomereinheiten aufgebaut sein, wobei eine Variation in der Glykol- und/oder der Säurekomponente möglich ist. Als Säurekomponente können die Copolyester u. a. 4,4-Bibenzoesäure, Adipinsäure, Glutarsäure, Bernsteinsäure, Sebazinsäure, Phtalsäure, Isophthalsäure, 5-Na-sulfoisophthalsäure oder polyfunktionelle Säuren wie Trimelithsäure u. a, enthalten.

Die Polyesterfolien können nach bekannten Verfahren aus einem Polyesterrohstoff mit ggf. weiteren Rohstoffen und/oder weiteren für Trägerfolien für magnetische Aufzeichnungen üblichen Additiven in üblichen Mengen von 0,1 bis maximal 20 Gew.-% sowohl als Monofolie als auch als mehrschichtige, ggf. coextrudierte Folien mit gleichen oder unterschiedlich ausgebildeten Oberflächen hergestellt werden, wobei eine Oberfläche beispielsweise pigmentiert sein kann und die andere Oberfläche kein oder weniger Pigment enthält. Ebenso können eine oder beide Oberflächen der Folie nach bekanntem Verfahren mit einer üblichen funktionalen Beschichtung versehen werden.

Bei dem bevorzugten Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und Längsrichtung bzw. in Längs-, Quer- und nochmals in Längsrichtung und/oder Querrichtung streckorientiert. Die Strecktemperaturen liegen im allgemeinen bei T_{g} +10 K bis T_{g} +60 K (T_{g} = Glastemperatur), das Streckverhältnis der Längsstreckung liegt üblicherweise bei 2 bis 6, insbesondere bei 3 bis 4,5, das der Querstreckung bei 2 bis 5, insbesondere bei 3 bis 4,5 und das der ggf. durchgeführten zweiten Längsstreckung bei 1,1 bis 3. Die erste Längsstreckung kann ggf. gleichzeitig mit der Querstreckung (Simultanstreckung) durchgeführt werden. Anschließend folgt die Thermofixierung der Folie bei Ofentemperaturen von 200 bis 260 °C, insbesondere bei 220 bis 250 °C. Anschließend wird die Folie abgekühlt und aufgewickelt.

Die aufgewickelte Folie wird an einer Konfektioniermaschine bei Geschwindigkeiten von 300 bis 400 m/min zu entsprechenden Kundenrollen konfektioniert. Die Konfektionierung erfolgt mit abgestimmten Wickelzügen und Kontaktdrucken, wobei sowohl für Zug und Kontaktdruck Charakteristiken in Abhängigkeit der Folienlauflänge gefahren werden.

Der Kontaktdruck liegt erfindungsgemäß zwischen 300 N/m bis 350 N/m, insbesondere zwischen 310 N/m bis 340 N/m. Der Wickelzug liegt vorteilhafterweise zwischen 90 N/m bis 200 N/m.

Entlang des Folienweges in der Konfektioniermaschine sind mehrere elektrische Entladungseinrichtungen eingebaut. Insbesondere sind am Wickel Entladestäbe, vorzugsweise der Fa. Eltex / Weil am Rhein vom Typ R50/R51 eingebaut.

Nach der Konfektionierung werden die Kundenrollen geprüft, verpackt und ausgeliefert.

Durch die überraschend niedrige Laserdefektrate nach der Magnetbandbeschichtung und nach dem Schneiden des Magnetbandes zu Pancakes, eignet sich die erfindungsgemäße Trägerfolie hervorragend für magnetische Aufzeichnungsmedien für hochwertige Audio-, Video- und Computerbänder sowie für Floppy Disks, Thermobänder usw.

Die Erfindung wird im folgenden anhand von Ausführungsbeispielen näher erläutert, ohne darauf beschränkt zu sein.

Die Messung der einzelnen Eigenschaften erfolgt dabei gemäß der folgenden Normen bzw. Verfahren:

### Lichttransmission

Unter der Lichttransmission ist das Verhältnis des insgesamt durchgelassenen Lichtes zur einfallenden Lichtmenge zu verstehen.

### F5-Longitudinalwert

Der Wert gibt die Reissfestigkeit der Folie bei 5 % Dehnung an. Die Messung erfolgte gemäß DIN 53 455.

### E-Modul

Das Elastizitätsmodul wurde nach DIN 53 457 gemessen. F5-Wert und E-Modul wurden mit einem ZWICK-Gerät Typ 1445 bestimmt, wobei die Messlänge 100 mm, die Streifenbreite 15 mm und die Abzugsgeschwindigkeit 10 mm/min (E-Modul), beziehungsweise 100 mm/min betrugen. Die angegebenen Werte basieren auf fünf Einzelmessungen.

### Rₐ-Wert

Der Rₐ-Wert drückt die Oberflächenrauhigkeit der Folie zahlenmäßig als arithmetischer Mittelwert aller Abstände des Rauigkeitsprofils R von der Mittellinie aus.

Die Messung erfolgte nach DIN 4768 mittels Oberflächenmessgerät Perthometer SP 6 der Firma Feinprüf GmbH, Göttingen. Die angegebenen Werte basieren auf sechs Einzelmessungen, wobei der höchste Wert bei der Mittelwertbildung unberücksichtigt blieb. Der »cut-off« betrug jeweils 0,25 mm.

Zusätzlich wurde der Mittenrauwert mittels des Hommel-Testers T20S / RP50 bei einem »cut-off« von 0,08 µm ermittelt (DIN 4762/1). Hierbei wurden folgende Parameter gewählt:
LT (Länge der Fläche): 0,48 mm X = 400
ZP (Breite der Fläche): 0,4 mm Y =50.000
MB /(Messbereich): 0,2 mm Z = 150
n= 50 (Linienzahl)
Vt = 0,05 mm /sec (Vorschubgeschwindigkeit)

### Elektrostatische Aufladung

Die elektrostatische Aufladung wird mit einem handelsüblichen, geeichten Influenzfeldmeter (Fa. Eltex/Weil am Rhein, Typ EMF 57) bei einem konstanten Abstand von 2 cm zum Wickel gemessen.

### Beispiel 1

Nach dem bekannten Coextrusionsverfahren wurde eine 13,1 µm dicke ABA-Folie hergestellt, wobei B die Kernschicht und A die Deckschichten repräsentieren.

Die Kernschicht B enthielt 50 Gew.-% PET mit einem SV-Wert (DCE) von 780 und 50 Gew.-% PET-Regenerat mit einem SV-Wert (DCE) von 740.

Die Deckschichten A bestanden im Wesentlichen aus einem PET mit einem SV-Wert (DCE) von 780 und enthielten 4.500 ppm CaCO₃ mit einem mittleren Teilchendurchmesser von 0,6 µm und 4.500 ppm Al₂O₃ mit einem mittleren Teilchendurchmesser von 0,2 µm, gemessen jeweils nach der Sedigraphmethode. Die Dicke der Deckschichten betrug 1 µm.

Die Folie wurde nach der Herstellung mit schnelllaufenden Konfektionierungsmaschinen, die mit den beschriebenen elektrischen Entladungsstäben ausgerüstet waren, zu Kundenrollen mit einer Breite von 1,2 m konfektioniert.

### Vergleichsbeispiel 1

Beispiel 1 wurde wiederholt. Die hergestellte Folie wurde auf den schnelllaufenden Konfektioniermaschinen aus Beispiel 1 konfektioniert. Im Gegensatz zu Beispiel 1 wurde aber mit der vom Hersteller standardmäßig installierten, herkömmlichen elektrischen Entladungseinrichtung entladen.

Die Ergebnisse sind in der nachfolgenden Tabelle dargestellt.

| | Beispiel 1 | Vergleichsbeispiel 1 |
|---|---|---|
| Dicke | 13,1 µm | 13,1 µm |
| Lichttransmission | 92 % | 92 % |
| Trübung | 2,7 % | 2,7 % |
| Ra-Wert | 13 | 13 |
| E-Modul längs | 4.200 N/mm² | 4.200 N/mm² |
| E-Modul quer | 5.100 N/mm² | 5.100 N/mm² |
| Elektrostatische Aufladung nach der Konfektionierung | - 35 kV/m | - 300 kV/m |
| Kontaktdruck | 320 N/m | 320 N/m |
| Laserdefektrate nach der Magnetbandbeschichtung und nach Schneiden des Magnetbandes | 0,9 % | 4,2 % |

## Patentansprüche

1. Wenigstens einschichtige, biaxial orientierte Trägerfolie für magnetische Aufzeichnungsmedien, die überwiegend aus einem kristallisierbaren Polyester aufgebaut ist, mit einer Dicke im Bereich von 1 bis 40 µm, **dadurch gekennzeichnet, dass** die Folie nach ihrer Konfektionierung zu Kundenrollen über ihre gesamte Wickellänge und -breite eine elektrostatische Aufladung aufweist, die im Bereich von -80 kV/m bis +80 kV/m liegt, wobei während der Konfektionierung der Kontaktdruck an den Rollenschneidern im Bereich von 300 N/m bis 350 N/m liegt.

2. Trägerfolie nach Anspruch 1, **dadurch gekennzeichnet, dass** ihre elektrostaische Aufladung im Bereich von -70 kV/m bis +70 kV/m, vorzugsweise von -60 kV/m bis +60 kV/m liegt, wobei während der Konfektionierung der Kontaktdruck an den Rollenschneidern im Bereich von 310 N/m bis 340N/m liegt.

3. Trägerfolie nach Anspruch 1 oder 2, **dadurch gekennzeichnet, dass** sie nach Beschichtung mit magnetischem Aufzeichnungsmedium eine Laserdefektrate von ≤ 2 % und insbesondere ≤ 1 % aufweist.

4. Trägerfolie nach einem der Ansprüche 1 bis 3, **dadurch gekennzeichnet, dass** sie mehrschichtig ist und einen symmetrischen oder asymmetrischen Aufbau besitzt, wobei verschieden rezepturierte beziehungsweise rezepturierte oder nicht rezepturierte Polyester oder solche gleicher chemischer Zusammensetzung, jedoch mit unterschiedlichem Molekulargewicht und verschiedener Viskosität, vorzugsweise durch Coextrusion vereinigt sind.

5. Trägerfolie nach einem der Ansprüche 1 bis 4, **dadurch gekennzeichnet, dass** sie im wesentlichen einen kristallisierbaren Polyester mit einem RSV-Wert im Bereich von 0,4 bis 1,0 dl/g enthält, der ein Polykondensat ist aus Terephthalsäure, Isophthalsäure oder2,6-Naphthalindicarbonsäure oder Mischungen aus diesen mit Glykolen mit 2 bis 10 C-Atomen ausgewählt aus der Gruppe enthaltend Polyethylenterephthalat, Polybuthylenterephthalat, Poly-1,4-cyclohexylendimethylenterephthalat, Polyethylen-2,6naphthalindicarboxylat, Polyehtylennaphthalat/-Bibenzoat, Polyethylen-p-hydroxy-benzoat oder Mischungen aus diesen.

6. Trägerfolie nach einem der Ansprüche 1 bis 5, **dadurch gekennzeichnet, dass** sie weitere Additive in Mengen im Bereich von 0,1 bis 20 Gew.-% enthält, wobei die Additive ausgewählt sind aus der Gruppe enthaltend anorganische oder organische Pigmente, Stabilisatoren, Antioxidantien, Antiblockmittel oder Mischungen von diesen.

7. Verfahren zum Herstellen einer Trägerfolie nach einem der Ansprüche 1 bis 6, nach dem Extrusionsverfahren, bei dem das aufgeschmolzene Polyestermaterial durch eine Schlitzdüse extrudiert und als weitgehend amorphe Vorfolie auf einer Kühlwalze abgeschreckt wird, diese Folie anschließend erneut erhitzt und in Längs-und Querrichtung bzw. in Quer- und Längsrichtung bzw. in Längs-, Quer- und nochmals in Längsrichtung und/oder Querrichtung streckorientiert wird, wobei die Strecktemperaturen auf Werte von T_{g} +10 K bis T_{g} +60 K eingestellt werden, das Streckverhältnis der Längsstreckung auf einen Wert im Bereich von 2 bis 6, insbesondere von 3 bis 4,5, das der Querstreckung auf einen Wert im Bereich von 2 bis 5, insbesondere von 3 bis 4,5 und das der ggf. durchgeführten zweiten Längsstreckung auf einen Wert im Bereich von 1,1 bis 3, und bei dem anschließend die Thermofixierung der Folie bei Ofentemperaturen von 200 bis 260 °C durchgeführt und dann die Folie abgekühlt und aufgewickelt wird, **dadurch gekennzeichnet, dass** die aufgewickelte Folie danach an einer Konfektioniermaschine bei Geschwindigkeiten im Bereich von 300 bis 400 m/min zu Kundenrollen konfektioniert wird und dass die Konfektionierung so mit abgestimmten Wickelzügen und Kontaktdrucken durchgeführt wird, dass der Kontaktdruck im Bereich zwischen 300 N/m bis 350 N/m eingestellt wird, insbesondere zwischen 310 N/m bis 340 N/m.

8. Verfahren nach Anspruch 7, **dadurch gekennzeichnet, dass** der Wickelzug auf einen Wert im Bereich zwischen 90 N/m bis 200 N/m eingestellt wird.

9. Verfahren nach Anspruch 7 oder 8, **dadurch gekennzeichnet, dass** die Folie entlang des Folienweges in der Konfektioniermaschine zwischen elektrischen Entladungseinrichtungen hindurchgeführt wird.

10. Verfahren nach Anspruch 9, **dadurch gekennzeichnet, dass** die elektrischen Entladungseinrichtungen im wickelnahen Bereich angeordnet sind und dass es sich bei den Entladungseinrichtungen um Entladestäbe handelt.

11. Verwendung einer Trägerfolie nach einem der Ansprüche 1 bis 6 für magnetische Aufzeichnungsmedien für hochwertige Audio-, Video- oder Computerbänder sowie für Floppy Disks oder Thermobänder.
